# EUROPÄISCHE PATENTSCHRIFT

(11) **EP 2 630 466 B1**
(45) Veröffentlichungstag und Bekanntmachung des Hinweises auf die Patenterteilung: **29.07.2015**
(21) Anmeldenummer: 11771132.5
(22) Anmeldetag: 18.10.2011
(51) Int. Cl.: G01N 1/20

(54) **VORRICHTUNG UND VERFAHREN ZUR PROBENNAHME**
APPARATUS AND METHOD FOR TAKING SAMPLES
DISPOSITIF ET PROCÉDÉ D'ÉCHANTILLONNAGE

(30) Priorität: 19.10.2010 DE 102010038279
(43) Veröffentlichungstag der Anmeldung: 28.08.2013
(73) Patentinhaber: FLSmidth A/S, 2500 Valby (DK)
(72) Erfinder: FAUST, Horst, 46286 Dorsten (DE)
(74) Vertreter: Brötz, Helmut
(86) Internationale Anmeldenummer: PCT/EP2011/068159
(87) Internationale Veröffentlichungsnummer: WO 2012/052421

(56) Entgegenhaltungen:
- DD-A5- 293 177
- DE-A1- 2 837 369
- DE-A1- 10 115 029
- DE-A1- 19 721 104
- DE-U1-202005 009 457
- US-A- 3 783 695
- US-A- 4 082 004

## Beschreibung

Die vorliegende Erfindung betrifft zunächst eine Vorrichtung zur Probenentnahme gemäß Anspruch 1.

Im Stand der Technik sind verschiedene Bauformen von Vorrichtungen zur Entnahme von Materialproben aus einem durch eine Leitung oder dergleichen strömenden Stoffstrom bekannt. In der Regel besitzen die bekannten Vorrichtungen trichterförmige Bauteile und werden in Leitungen eingesetzt, in denen der Materialstrom mittels Gravitation vertikal gefördert wird. Solche bekannten Probennehmer sind in horizontal verlegten Förderleitungen mit horizontalem Materialstrom nicht einsatzbar. Bei einem verbreiteten Bautyp, der aus den Druckschriften DE 199 09 437 A1, DE 10 2006 049 423 A1 und DD 160 734 bekannt ist, wird ein kleines zur Probenentnahme dienendes Entnahmeelement, das auch als sog. Probennehmer bezeichnet wird, in ein größeres, von dem Material durchströmtes Fallrohr in dessen Querrichtung eingefahren, um die Probe zu entnehmen. Als Einschränkung wird empfunden, dass das Probenmaterial dabei nur aus einem begrenzten Teil des Strömungsquerschnitts entnommen werden kann, so dass keine für den Strömungsquerschnitt repräsentative Probennahme nach der sog. Theory of Sampling (TOS) möglich ist. Aus DE 197 21 104 A1 ist ein Probennehmer bekannt, dessen Probennahmerohr kardanisch in der Strömungsmitte fixiert ist und den Strömungsquerschnitt mit seiner Öffnung spiralförmig durchfährt. Allerdings besteht hier die Einschränkung, dass das Entnahmeelement nicht aus dem Stoffstrom entfernt werden kann, d.h. diesen stört. Aus DD 293 177 A5 ist eine auch zur Probennahme geeignete Armatur bekannt, mittels der eine Probenentnahme durch Verzweigung oder zeitweilige Umleitung eines Stoffstromes möglich ist, so dass der reguläre Stoffstrom zeitweilig unterbrochen werden muss. Ein Probennehmer zur Entnahme einer repräsentativen Querschnittsprobe ist aus DE 20 2005 009 457 U1 bekannt, allerdings erscheint dieser nicht ohne Weiteres zur Probenentnahme aus geschlossenen Leitungen geeignet. Eine gattungsgemäße Vorrichtung ist aus DE 101 15 029 B4 bekannt. Dessen Entnahmeelement vollführt mittels einer zu der Leitungslärigsrichtung geneigten Antriebsachse eine kegelförmige Bewegungsform, so dass ein aufwändiges Gehäuse benötigt wird und sich beim Durchfahren des Strömungsquerschnitts mit dem Entnahmeelement dessen Schlitzöffnung zu der Strömungslängsrichtung mehrachsig neigt. Aus US 3,783,695 A ist ein Probennehmer bekannt, dessen Entnahmeelement einen geradlinig verlaufenden Öffnungsschlitz aufweist. US 4,082,004 A offenbart eine Vorrichtung zur Probennahme, dessen Entnahmeelement ebenfalls einen geraden Öffnungsverlauf besitzt. Aus DE 28 27 369 A1 ist eine Einrichtung zum Entnehmen von Proben bekannt, wobei darauf abgestellt wird, dass der Probenaufnahmeschlitz in dem Probenentnahmekopf am Ende jedes Entnahmezyklus und bis die nächste Probe aufzunehmen ist, ganz verschlossen ist. Dazu dient ein sog. Schließ- oder Abdichtelement, und der Öffnungslängsrichtungsverlauf erstreckt sich wiederum entlang einer Geraden.

Vor diesem Hintergrund liegt der Erfindung die Aufgabe zugrunde, eine gattungsgemäße Vorrichtung vorteilhaft weiterzubilden, so dass insbesondere einzelne oder mehrere der vorgenannten Einschränkungen möglichst weitgehend vermieden werden können.

Die Aufgabe wird erfindungsgemäß mit den kennzeichnenden Merkmalen von Anspruch 1 gelöst. Eine derartige Vorrichtung eignet sich in besonderer Weise zur Entnahme von für den Querschnitt eines Stoffstromes repräsentativen Proben nach der für einen Fachmann auf dem Gebiet der Probennahme bekannten Theory of Sampling (TOS). Je nach bevorzugter Ausgestaltung besteht die Möglichkeit, dass das Entnahmeelement bzw. dessen Eintrittsöffnung während der Bewegung quer durch den Stoffstrom, d.h. über den Öffnungs- bzw. Strömungsquerschnitt hinweg, seine Neigung zu der Strömungslängsrichtung des Stoffstromes gar nicht oder bspw. nur in einer Richtung bzw. Ebene ändert. Auf diese Weise werden über den gesamten Öffnungs- bzw. Strömungsquerschnitt hinweg weitgehend gleiche Probenentnahmebedingungen geschaffen. Hinzu kommt die Möglichkeit, eine derartige Bewegungsform in einem kompakten und einfachen Gehäuse aufzunehmen. Eine im Rahmen der Erfindung, welche auch die nachfolgend erläuterten Aspekte mit einschließt, liegende Vorrichtung kann bspw. zur Probenentnahme aus einem Materialstrom verwendet werden, der ein oder mehrere, praktisch beliebige, rieselfähige und/oder strömungsfähige Materialien bzw. Medien enthalten kann. Bspw. kann die Vorrichtung zur Entnahme von Proben aus Pulver, Asche, Pellets, Granulaten oder suspensiven Flüssigkeiten dienen; auch eine Probenentnahme aus Gasen ist denkbar. Eine erfindungsgemäße Vorrichtung kann des Weiteren je nach Anforderungen praktisch beliebig große Abmessungen aufweisen. Der Begriff Entnahmeelement wird gleichbedeutend zu dem Begriff Probennehmer verwendet Unter dem Profillängsrichtungsverlauf des Entnahmeelementes wird dessen Form bzw. Verlauf in Profilrichtung, also quer zu dem Profilquerschnitt, verstanden, wobei der Profillängsrichtungsverlauf bspw. auf die Querschnittsmitte oder bspw. auf den Querschnittsschwerpunkt bezogen werden kann. Bevorzugt ist dabei, dass sich der Profillängsrichtungsverlauf innerhalb einer geometrischen Ebene erstreckt. Entsprechend wird unter dem Öffnungslängsrichtungsverlauf die Verlaufsform der langgestreckten Eintrittsöffnung quer zu dem Profil- bzw. Öffnungsquerschnitt, d.h. in Öffnungs- bzw. Profillängsrichtung verstanden. Die erfindungsgemäße Vorrichtung wird vorzugsweise in der Weise bzw. Richtung in eine von dem Materialstrom bzw. Gut durchströmte Leitung eingebaut, dass die längliche Eintrittsöffnung während der Bewegung des Entnahmeelementes bzw. Entnahmegefäßes diametral und/oder in einer Ebene geneigt entgegen der Leitungslängsrichtung zeigt, so dass quer zu der Anschlussöffnung durch das Gehäuse strömendes Material bzw. Gut auf die Eintrittsöffnung trifft und durch sie hindurch in den hohlen Probenaufnahmebereich des Entnahmeelements gelangen kann, um von dort vorzugsweise durch eine Austrittsöffnung aus dem Probennehmer auszutreten. Es versteht sich, dass eine erfindungsgemäße Vorrichtung, falls Bedarf besteht, auch in der Weise abgewandelt werden kann, dass die langgestreckte Eintrittsöffnung den Strömungsquerschnitt nicht ganzflächig, sondern nur teilflächig während einer Probenentnahme überfährt. Eine zweckmäßige Weiterbildung bzw. Verwendung wird auch darin gesehen, dass die Anschlussöffnungen mit je einem Leitungsabschnitt verbunden sind, wobei einer oder beide Leitungsabschnitte in ihrer Längserstreckungsrichtung horizontal oder zumindest im Wesentlichen horizontal ausgerichtet sind. Ein wichtiges Merkmal wird darin gesehen, dass die Erfindung in der Lage ist bzw. dass die erfindungsgemäße Vorrichtung geeignet ist, nicht nur aus einem vertikalen Materialstrom, sondern auch wahlweise bspw. aus einem horizontalen Materialstrom eine repräsentative Querschnittsprobe zu entnehmen. Zudem ist für die Erfindung unerheblich, in welcher Richtung ein Materialstrom in der horizontalen und/oder vertikalen Leitung "fließt".

Die Erfindung betrifft gemäß einem zweiten Aspekt eine Vorrichtung zur Probenentnahme gemäß Anspruch 2.

Bezüglich der zuvor und nachfolgend erläuterten Aspekte der Erfindung bestehen zahlreiche Möglichkeiten zur bevorzugten Weiterbildung. Es ist vorgesehen, dass sich der Öffnungslängsrichtungsverlauf des Entnahmeelements, vorzugsweise eben, entlang einer geometrischen Kugeloberfläche erstreckt und dass sich eine Bewegungsbahn bzw. eine Bewegungsform des Entnahmeelementes geometrisch in einer Kreisrichtung um eine Drehachse erstreckt. Bevorzugt ist, dass sich eine von der Eintrittsoberfläche abgewandte rückseitige Oberfläche des Entnahmeelements längs und quer zu dem Öffnungslängsrichtungsverlauf entlang einer Kugeloberfläche erstreckt und dass die Gehäusekammer zwischen den beiden Anschlussöffnungen einen Innenwandabschnitt aufweist, der sich entlang einer geometrischen Kugeloberfläche erstreckt und an den sich die Oberfläche des Entnahmeelements während zumindest eines Abschnittes seiner Bewegung spielfrei oder zumindest spielarm anschmiegt. Auch können an einem oder beiden Längsenden des Entnahmeelements Gelenkmittel angeschlossen sein, die mit Gelenkmitteln des Gehäuses ein Drehgelenk um eine Drehachse in einer von dem Profillängsrichtungsverlauf aufgespannten geometrischen Ebene bilden.

Gemäß einem weiteren Gedanken besteht die Möglichkeit, dass sich das Entnahmeelement, vorzugsweise an zwei möglichen zueinander entgegengesetzten Positionen, innerhalb seiner Bewegungsbahn in einer zu den Öffnungsquerschnitten jeweils senkrechten Projektionsbetrachtung vollständig aus einer Überlappung mit einem Öffnungsquerschnitt oder mit beiden Öffnungsquerschnitten herausfahren lässt. Dazu kann die Gehäusekammer in ihrem Inneren einen oder mehrere Aufnahmehohlräume umfassen, die sich in einer in Materialströmungslängsrichtung geführten Projektionsbetrachtung an den Außenrand des Öffnungs- bzw. Strömungsquerschnitts offen anschließen und in die sich der Probennehmer, während keine Probe zu entnehmen ist, vorzugsweise vollständig einfahren lässt, so dass er nicht störend in den von den Anschlussöffnungen bestimmten Strömungskernquerschnitt ragt. Auf diese Weise kann eine Störung des Materialstroms außerhalb der Probenentnahmezeiten durch das Entnahmeelement vermieden werden.

Auch ist bevorzugt, dass das Entnahmeelement rinnenförmig oder als länglicher, entlang seines Öffnungslängsrichtungsverlaufes geschlitzter Hohlkörper, vorzugsweise als geschlitzter rohrartiger Hohlkörper, ausgebildet ist, an dessen zumindest einem Längsende eine, vorzugsweise an deren ganzem Umfang geschlossene, Austrittsöffnung für das Probenmaterial ausgebildet ist. Als zweckmäßig wird angesehen, dass der hohle Probenaufnahmebereich an seinem einen Längsende stirnseitig in besagte Austrittsöffnung übergeht und dass die Austrittsöffnung in der gewählten Anordnung bzw. Lage des Probennehmers nach unten weist. Die Materialprobe kann somit auch schwerkraftunterstützt, d.h. ggf. auch unabhängig von einem den Probenaustrag unterstützenden Strömungsüberdruck, aus dem Entnahmeelement austreten. Der Austrag des Probenmaterials kann je nach Anforderungen entweder kontinuierlich während der Probenentnahme oder diskontinuierlich nach Abschluss der Probenentnahme erfolgen. Zur Erzielung einer für den Querschnitt repräsentativen Probenentnahme kann der Strömungsquerschnitt während eines Entnahmevorganges vorzugsweise einmal oder mehrmals ganzflächig mit der Eintrittsöffnung des Entnahmeelementes in einer Projektionsbetrachtung überfahren werden. Wenn insbesondere ein kontinuierlicher Probenaustrag vorgesehen ist, ermöglicht dies auch vielfache Querschnittsdurchquerungen mit dem Entnahmeelement während praktisch beliebig langer Entnahmezeiträume.

Zur Ausgestaltung des Entnahmeelements bzw. Probennehmers bestehen vielfältige Möglichkeiten, und diese kann von den hier auch nachfolgend mit Bezug auf die Figuren beispielhaft beschriebenen drehbaren Ausführungen abweichen. Das Probenentnahmeelement kann je nach Anwendungsfall unterschiedlich geformt sein nach den Anforderungen der Theory of Sampling (TOS). Die Parameter hierfür sind insbesondere die Korngröße von Probenmaterial, die Durchmesser bzw. Querschnittsabmessungen des Entnahmeelements und die Durchmesser der Anschlussöffnungen des Gehäuses, die Durchsatzmasse und die Geschwindigkeit, und auch das Material selbst (bspw. suspensive Flüssigkeiten, pulverförmige Stoffe, Granulate und sonstige Feststoffe, die sich durch Rohrleitungen fördern lassen). Diese Eingangsgrößen sind bei der Gestaltung des Entnahmeelements bzw. Probennehmers und der Vorrichtung zu berücksichtigen. Weitere Einflussgrößen für die konkrete Ausgestaltung können der Druck und die Geschwindigkeit im Materialstrom sowie bspw. die Kohäsionsneigung von Materialpartikeln sein.

Als Vorteile der erfindungsgemäßen Vorrichtung werden angesehen, dass dieser sich besonders zu einer den gesamten Strömungsquerschnitt repräsentierenden Probenentnahme gemäß der TOS eignet, dass u.a. auch eine Anordnung in horizontalen Leitungsabschnitten möglich ist, dass der Materialstrom zwecks Probenentnahme nicht unterbrochen werden muss und dass in bevorzugter Ausgestaltung das Entnahmeelement, welches zur Aufnahme und Ableitung von Probenmaterial dient, auch außerhalb des Strömungskernquerschnittes der Leitung herausbewegt werden kann, wenn keine Probe entnommen werden soll. Das Gehäuse der Vorrichtung kann auf einfache Weise bspw. in die Leitung eines Materialstroms eingeflanscht werden.

Auch besteht die Möglichkeit, dass der hohle Probenaufnahmebereich, der zum Auffangen von Probenmaterial aus der Strömung dient, an seinem quer zum Längsrichtungsverlauf orientierten Querschnitt etwa halbseitig unberandet, also offen ist. Insofern kann eine rinnenförmige Ausbildung vorliegen. Alternativ kann bspw. der hohle Probenaufnahmebereich an seinem quer zur Längsrichtung orientierten Querschnitt nur eine (oder mehrere) schmale Wandunterbrechung aufweisen, so dass mehr von einem Hohlkörper mit Längsschlitz zu sprechen ist. Die Breite der Eintrittsöffnung kann in Längsrichtung konstant oder veränderlich sein. Insbesondere besteht die Möglichkeit, dass die Breite der Eintrittsöffnung quer zu dem Öffnungslängsrichtungsverlauf und/oder die Breite des Querschnittes des hohlen Probeaufnahmebereichs quer zum Profillängsrichtungsverlauf durchgehend oder zumindest abschnittsweise gleichbleibend ist und kleiner als die maximale Erstreckung, vorzugsweise als der Durchmesser, des freien Öffnungsquerschnittes der Anschlussöffnungen ist. Die Länge der Eintrittsöffnung entspricht vorzugsweise zumindest der maximalen Erstreckung von zumindest einem der beiden Öffnungsquerschnitte in zumindest einer der Querschnittsrichtungen, vorzugsweise zumindest dem Durchmesser des freien Öffnungsquerschnittes.

Als zweckmäßig wird angesehen, dass in einer Betrachtungsebene, die von dem Profillängsrichtungsverlauf des Entnahmeelements mit einer mittig quer durch einen Öffnungsquerschnitt verlaufenden geometrischen Längsmittellinie aufgespannt wird, der Profillängsrichtungsverlauf und/oder der Öffnungslängsrichtungsverlauf punktsymmetrisch zu seinem Schnittpunkt mit der besagten Längsmittellinie und vorzugsweise achssymmetrisch zu der Längsmittellinie verläuft. Dies wirkt sich gleichfalls begünstigend auf eine gewünschte, für den Querschnitt repräsentative Probenentnahme aus. Betreffend die Öffnungsquerschnitte der beiden Anschlussöffnungen ist bevorzugt, dass diese zueinander an dem Gehäuse parallel beabstandet und in einer zu ihren Querschnittsebenen senkrechten Projektionsrichtung zueinander konzentrisch angeordnet sind. Dies ermöglicht einen gerade durch das Gehäuse führenden Materialstrom und begünstigt die Ausbildung einer Strömung mit über den Strömungsquerschnitt hinweg möglichst einheitlichen Strömungs- und Probeentnahmebedingungen. Des Weiteren ist bevorzugt, dass die Bewegungsrichtung des Entnahmeelementes quer, vorzugsweise senkrecht, zu dem Öffnungslängsrichtungsverlauf des Entnahmeelementes bzw. des hohlen Probeaufnahmebereichs orientiert ist. Die Bewegung des Entnahmeelementes kann bspw. manuell oder mittels einer, insbesondere automatisierten, Antriebseinrichtung vorgenommen werden. Vorzugsweise kann bspw. ein elektrischer, pneumatischer oder hydraulischer Antrieb oder dergleichen, zum Bewegungsantrieb des Entnahmeelements in der Gehäusekammer vorgesehen sein, wobei die Antriebseinrichtung an eine Bewegung des Entnahmeelementes mit vorzugsweise konstanter Geschwindigkeit angepasst ist. Das hier beschriebene sog. Entnahmeelement, das im technischen Sprachgebrauch auch als sog. Probennehmer bezeichnet wird, kann ein- oder mehrteilig aufgebaut sein.

Die Erfindung betrifft gemäß einem weiteren Aspekt auch ein Verfahren zur Probennahme gemäß Anspruch 13.

Zu diesbezüglich erreichbaren Wirkungen und Vorteilen wird auf die vorangehende Beschreibung Bezug genommen. Vorteilhaft besteht die Möglichkeit, dass die bei dem Verfahren verwendete Vorrichtung eines oder mehrere der vorangehend beschriebenen Merkmale aufweist.

Die Erfindung wird nachfolgend mit Bezug auf die beigefügten Figuren, welche bevorzugte Ausführüngsbeispiele wiedergeben, weiter beschrieben. Darin zeigt:
- Fig. 1: perspektivisch eine erfindungsgemäße Vorrichtung zur Probennahme gemäß einem ersten bevorzugten Ausführungsbeispiel, angeordnet zwischen zwei gestrichelt angedeuteten Leitungsabschnitten,
- Fig. 2: die Vorrichtung gemäß Fig. 1 in dortiger Blickrichtung II,
- Fig. 3: die Vorrichtung gemäß Fig. 1 in dortiger Blickrichtung III,
- Fig. 4: perspektivisch die Vorrichtung gemäß Figuren 1 bis 3, demgegenüber vergrößert und mit teilweisem Aufbruch,
- Fig. 5: eine verkleinert gezeigte Schnittansicht der Anordnung aus Fig. 4 entlang der dortigen Schnittebene V - V, mit korrespondierender Drehlage des Entnahmeelementes,
- Fig. 5a: eine Schnittansicht der Anordnung aus Fig. 5 entlang der dortigen Schnittebene Va - Va,
- Fig. 6: eine Schnittansicht analog Fig. 5, jedoch mit demgegenüber verdrehtem Entnahmeelement, wobei aus Darstellungsgründen das Entnahmeelement oberhalb der Zeichenebene geschnitten ist,
- Fig. 6a: eine Schnittansicht der Anordnung aus Fig. 6 entlang dortiger Schnittebene VIa - VIa,
- Fig. 7: eine zu den Figuren 5,6 analoge Schnittansicht, jedoch mit demgegenüber nochmals weiter verdrehtem Entnahmeelement und
- Fig. 7a: eine Schnittansicht der Anordnung aus Fig. 7, entlang der dortigen Schnittebene VIIa - VIIa.

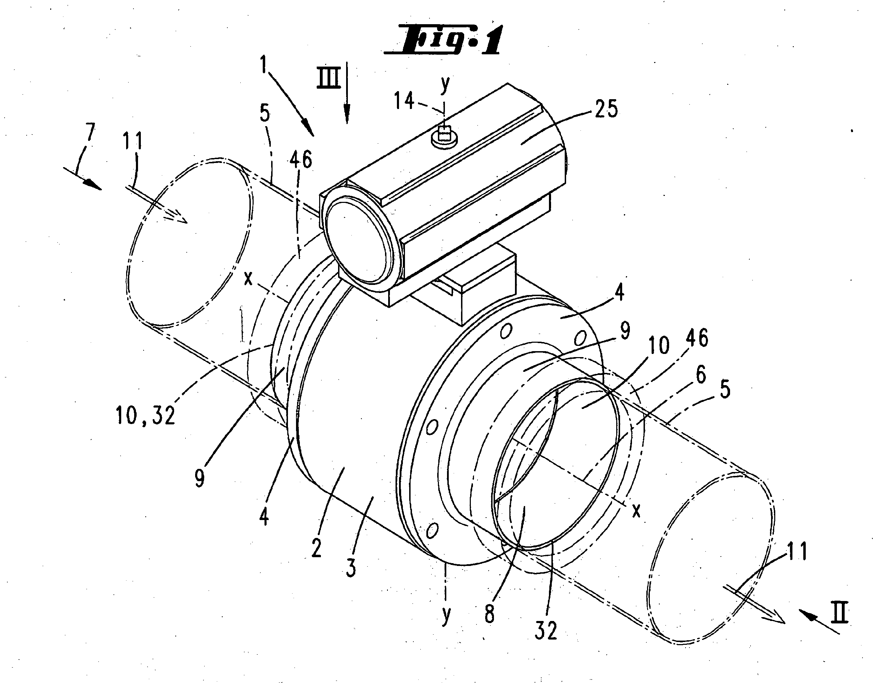

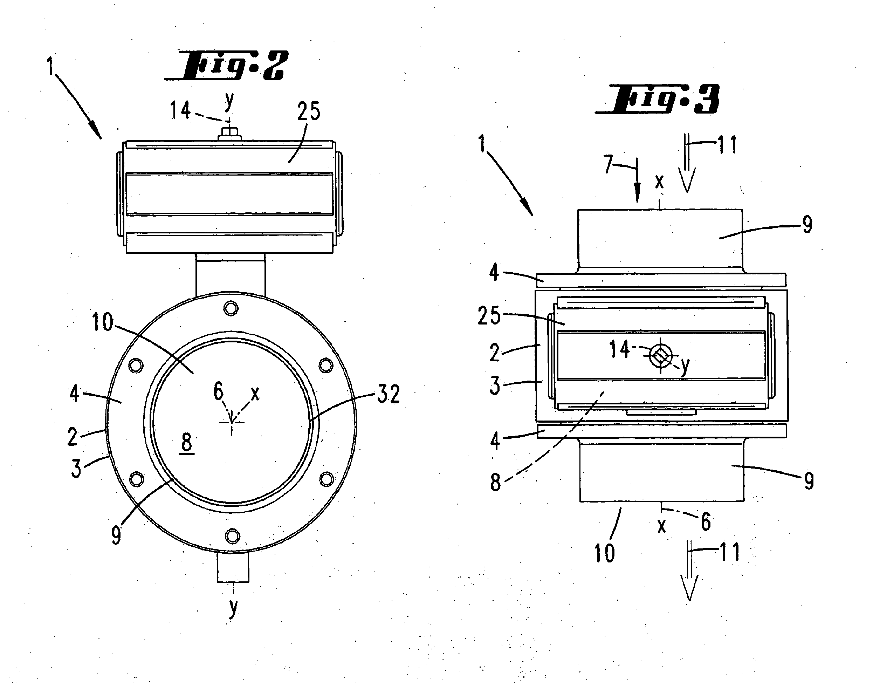

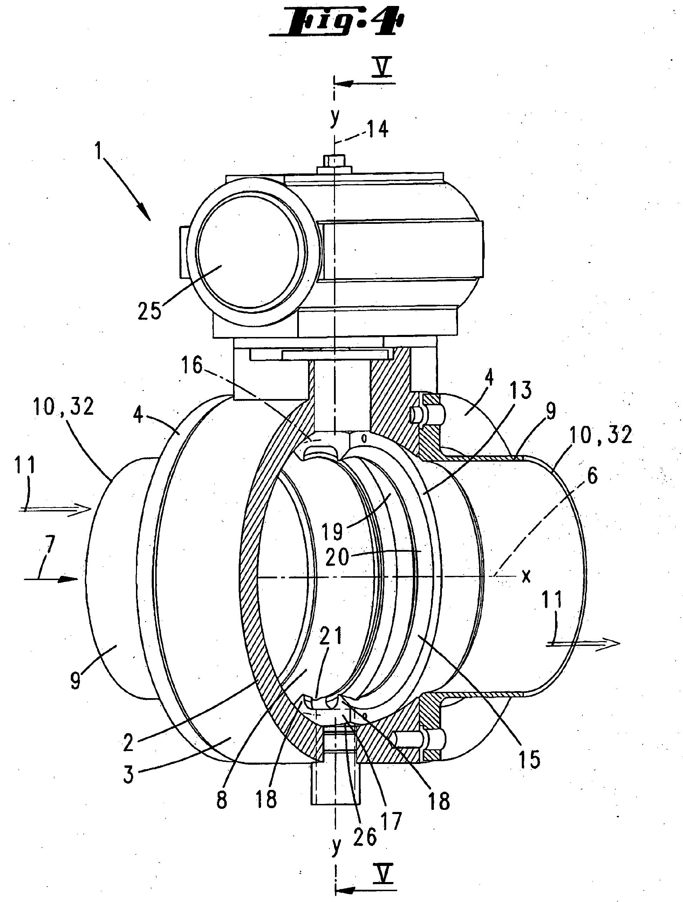

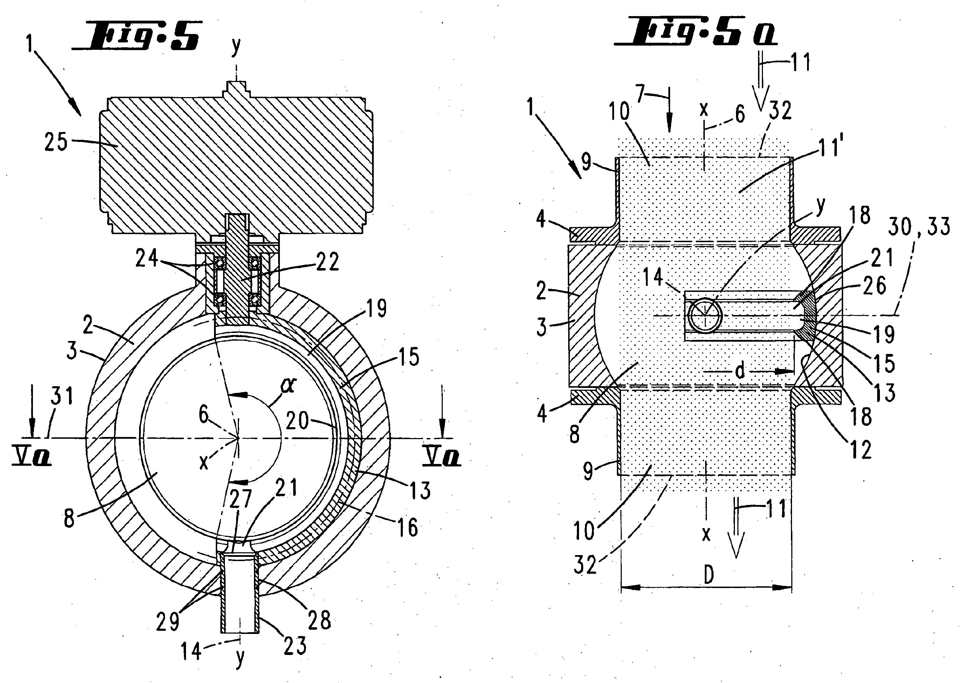

Mit Bezug auf die Figuren 1 bis 7a wird zunächst eine erfindungsgemäße Vorrichtung 1 zur Probennahme gemäß einem ersten bevorzugten Ausführungsbeispiel beschrieben. Diese umfasst ein Gehäuse 2, welches in dem Beispiel (d.h. nicht notwendig) mehrteilig einen mittigen Gehäusekörper 3 und zwei Rohrflansche 4 aufweist, die an je einer der beiden gegenüberliegenden Stirnseiten des Gehäusekörpers 3 angeschraubt sind. Die Rohrflansche 4 dienen zur Befestigung von je einem Leitungsabschnitt 5, der in Fig. 1 in einem Längenabschnitt gestrichelt angedeutet ist. Deren geometrische Mittelachse x - x beschreibt somit die Längserstreckungsrichtung 6 bzw. Strömungslängsrichtung einer Leitung, in welche die Vorrichtung 1 eingesetzt wurde, um damit Materialproben aus einem in Figur 1 durch Pfeile angedeuteten Materialstrom 11 zu entnehmen, welcher in der in Fig. 1 durch den Pfeil angedeuteten Strömungsrichtung 7 strömt. Das Gehäuse 2 bildet in seinem Inneren eine Gehäusekammer 8 mit zwei voneinander in Längserstreckungsrichtung 6 beabstandeten, zueinander parallelen, von den Flanschstutzen 9 gebildeten Anschlussöffnungen 10. Diese besitzen beide den gleichen Durchmesser D, liegen fluchtend zueinander und geben damit einen gewissen Kernquerschnitt für den nur in diesem Strömungskernbereich 11' in den Figuren 5a - 7a schematisch mittels Punkten angedeuteten Materialstrom 11 vor. Es versteht sich aber, dass das strömende Material je nach Strömungsverhältnissen die gesamte Gehäusekammer 8 ausfüllt, also auch die an den um die geometrische Mittellinie x - x herumlaufenden, konkaven Innenwandabschnitt 12 angrenzenden Randbereiche, wobei dort aber, lediglich zur Veranschaulichung des Strömungskernquerschnittes, das Punktmuster nicht vorhanden ist. In dem Ausführungsbeispiel ist innerhalb des Gehäuses 2 ein Entnahmeelement 13, das im technischen Sprachgebrauch auch als Probennehmer bezeichnet wird, um eine geometrische Drehachse 14, die sich entlang der Koordinatenachse y - y erstreckt, drehbar angeordnet. Wie insbesondere die Figuren 4 und 5 veranschaulichen, umfasst das Entnahmeelement 13 in dem Beispiel eine profilartige Rinne 15. Der sich in Querrichtung mittig durch den bspw. in Fig. 4 gezeigten Rinnenquerschnitt erstreckende Profillängsrichtungsverlauf 16 erstreckt sich entlang einer Kreislinie etwas weiter als über einen halben, seitlichen Umfang, vgl. Fig. 5. Der Rinnenboden 17 und die beiden Rinnenwände 18 beranden U-profilartig einen sich entlang des Profillängsrichtungsverlaufes 16 erstreckenden hohlen Probeaufnahmebereich 19, so dass dieser eine von den beiden Rinnenwänden 18 parallel berandete, sich entlang eines dazu mittigen Öffnungslängsrichtungsverlaufs 20 erstreckende Eintrittsöffnung 21 für Probenmaterial aufweist. Die ihm zugewandten Oberflächen der Rinne 15 bilden eine Auffangfläche für Probenmaterial. Zufolge dessen erstreckt sich auch der Öffnungslängsrichtungsverlauf 20 in der Projektionsbetrachtung gemäß Fig. 5 entlang einer gedachten Kreislinie, und zwar ebenfalls über etwas mehr als den halben seitlichen Umfang, in dem gezeigten Beispiel beträgt der Umfangswinkel zwischen etwa 200° und 210°. Der Probenaufnahmebereich 19 ist mit seiner Eintrittsöffnung, je nach Drehstellung des Entnahmeelementes 13, der Strömungslängsrichtung 7 des Materialstromes mehr oder minder zugewandt, wobei die Figuren 5a - 7a verdeutlichen, dass sich die Bewegungsbahn bzw. -richtung der Rinne 15 in einer Kreisrichtung um die Drehachse 14 erstreckt. Im Bereich beider Längsenden der Rinne 15 ist je ein zu der Drehachse 14 konzentrischer Drehzapfen 22, 23 befestigt. Beide Drehzapfen 22, 23 sind in Bohrungen in dem Rinnenboden 17 fest eingesetzt (bspw. dort verschweißt) und erstrecken sich in Bezug auf die etwa halbkreisförmige bzw. sichelförmige Form der Rinne nur nach radial außen, so dass die Drehzapfen 22, 23 nicht in den Probeaufnahmebereich 19, der zum Auffangen und zur Ableitung von Probenmaterial dient, hineinragen. Der in Blickrichtung Fig. 5 obere Drehzapfen 22 ist an der Oberseite des Gehäuses 2 mittels Kugellagern 24 gelagert. Dessen gegenüberliegendes bzw. oberes Ende ist drehformschlüssig mit einem nur schematisch angedeuteten Antrieb 25, bei dem es sich bspw. um einen Elektromotor oder um einen pneumatischen oder hydraulischen Antrieb handelt, verbunden. Wird der Antrieb 25 aktiviert, überträgt er mittels des Drehzapfens 22 ein Drehmoment auf die Rinne 15, so dass diese in der Gehäusekammer 8 eine rotierende Bewegung um die geometrische Drehachse 14 ausführt. In dem Beispiel ist vorgesehen, dass sich eine von der Eintrittsöffnung 21 abgewandte rückseitige konvexe Oberfläche 26 der Rinne 15 längs und quer zu dem Profillängsrichtungsverlauf 16 betrachtet entlang einer gedachten Kugeloberfläche erstreckt und dass der konkave Innenwandabschnitt 12 des Gehäuses 2 sich ebenfalls entlang einer gedachten Kugeloberfläche von praktisch gleichem Kugeldurchmesser erstreckt, so dass sich die Oberfläche 26 der Rinne 15 während der rotierenden Bewegung praktisch spielfrei an den Innenwandabschnitt 12 anschmiegt. In dem Beispiel besteht kein Drehanschlag, so dass sich das Entnahmeelement um seine Drehachse unbegrenzt drehen lässt. Die Vorrichtung 1 ist somit für die Entnahme von Proben nicht auf die in Figur 1 gezeigte Strömungsrichtung 7 festgelegt. Vielmehr kann, wenn sich die Strömungsrichtung 7 umkehrt, auch die Vorrichtung hieran angepasst werden, indem der Probennehmer bzw. das Entnahmeelement 13 zur Umstellung um eine halbe Umdrehung verdreht wird. Der in Blickrichtung der Figuren 4, 5 untere Drehzapfen 23 für das Entnahmeelement 13 ist als zylindrische Hülse ausgebildet, und der hohle Probenaufnahmebereich 19 geht in seinem untersten Abschnitt in einer Austrittsöffnung 27 in das hohle Hülseninnere über. Dies ermöglicht, dass in der Strömungsrichtung 7 auf die Innenwand der Rinne 15 treffendes Material (Pulver, Granulat oder dergleichen) entlang dem Rinnenboden 17 in Rinnenlängsrichtung transportiert wird und durch die Austrittsöffnung 27 und durch den hohlen Drehzapfen 23 aus dem Entnahmeelement 13 und somit aus der Vorrichtung 1 entnommen werden kann. Die untere Hülse 23 ist in einer Bohrung 28 durch den unteren Scheitel des Gehäusekörpers 3 um die Drehachse 14 drehbar gehalten und darin mittels zwei O-Ringen 29 abgedichtet. Somit bilden die Drehzapfen 22, 23 mit den Kugellagern 24 und der Bohrung 28 Führungsmittel, mittels denen eine definierte Bewegungsform des Entnahmeelementes 13 als Rotation um die Drehachse 14 in der Gehäusekammer 8 vorbestimmt ist.

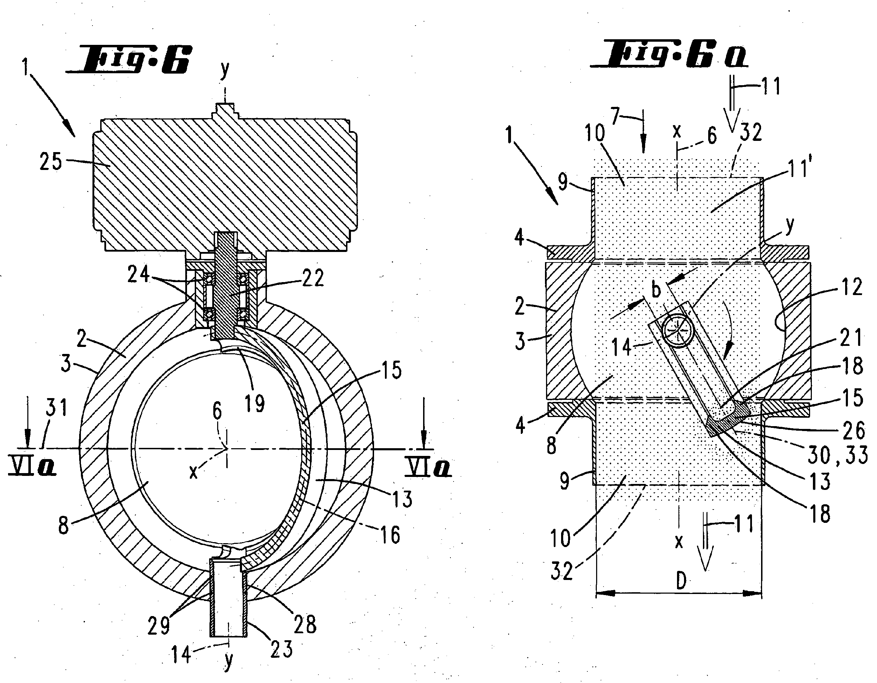

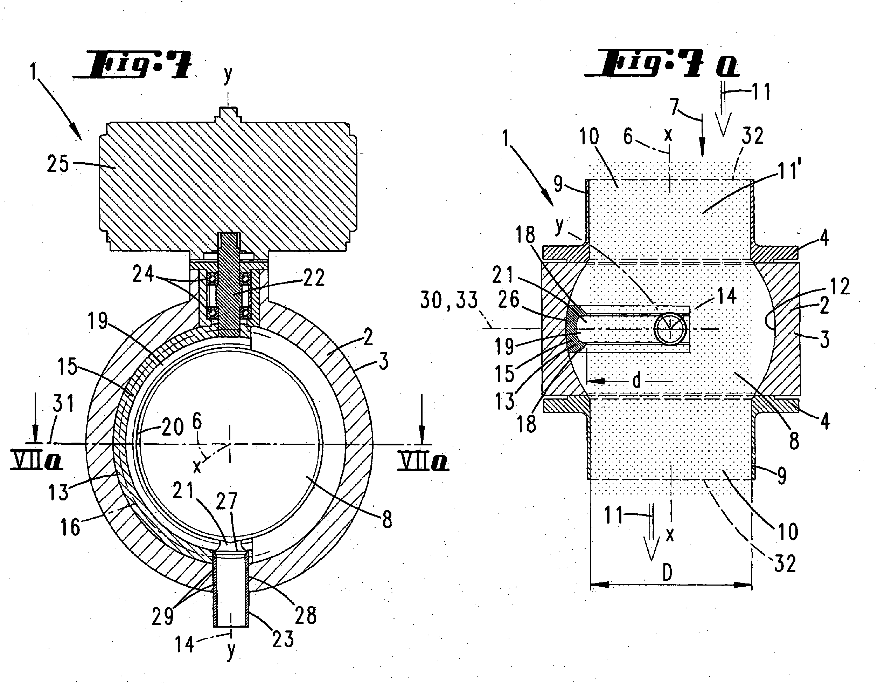

Die Figuren 5a bis 7a veranschaulichen, dass zwar die Eintrittsöffnung 21 der Rinne 15 während einer Drehung verschiedene Neigungswinkel zu dem ihr in den Figuren 5a, 6a, 7a oberen, zugewandten Öffnungsquerschnitt 32 einnimmt, dass sich aber durch die Drehung dieser gesamte Öffnungsquerschnitt 32 (Durchmesser D) der den Gehäuseeingang bildenden Anschlussöffnung 10 in einer in Strömungslängsrichtung 7 bzw. senkrecht zu den Öffnungsquerschnitten 32 geführten Projektionsbetrachtung mittels der Eintrittsöffnung 21 vollflächig überfahren lässt. Zufolge der von den Führungsmitteln vorgegebenen Bewegungsform ist die Orientierung des Entnahmeelements 13 in einer mit ihm um die Drehachse 14 gedrehten Betrachtungsebene 30 relativ zu deren geometrischen Schnittlinie 33 mit einer unbewegten geometrischen Bezugsebene 31, die zu der Betrachtungsebene 30 und zu dem Öffnungsquerschnitt 32 senkrecht verläuft, bei einer Bewegung des Entnahmeelementes 13 unverändert. In dem Beispiel erstreckt sich die Bezugsebene 31 horizontal durch die Längserstreckungsrichtung 6, d.h. senkrecht zu der geometrischen Drehachse 14. Die Betrachtungsebene 30 wird von dem Profillängsrichtungsverlauf 16 und ebenso von dem Öffnungslängsrichtungsverlauf 20 aufgespannt. Die Betrachtungsebene verläuft somit senkrecht zur Zeichenebene von Fig. 5a. Innerhalb der Betrachtungsebene 30 ändert das Entnahmeelement 30 seine insbesondere auch winkelmäßige Ausrichtung zu der die Betrachtungsebene 30 schneidenden Bezugsebene 31 nicht, so dass insofern unabhängig von der Position der Rinne 15 der Gehäusekammer 8 immer gleiche Bedingungen für die Probenentnahme vorliegen. Um den in Blickrichtung der Figuren 5a, 6a und 7a oberen Öffnungsquerschnitt 32 einmal in der Projektionsbetrachtung mit der ihm zugewandten Eintrittsöffnung 21 der Rinne 15 vollständig zu überfahren, kann das Entnahmeelement 13 zumindest einmal von seiner in Fig. 5a gezeigten seitlichen Position, in der die Betrachtungsebene 30 senkrecht zu der Strömungsrichtung 7 bzw. parallel zu den Öffnungsquerschnitten steht, um eine halbe Umdrehung und somit in die in Fig. 7a gezeigte Randposition verdreht werden. Fig. 6a zeigt eine Zwischendrehstellung. Bei dieser Bewegung wird somit mit der Rinne 15 aus jedem Teil des mit dem Punktmuster schematisch bezeichneten Strömungsquerschnitts Material für die Probe aus dem Materialstrom entnommen. In der Projektionsbetrachtung liegt bei der Bewegung jeder Teil des oberen Öffnungsquerschnitts 32 bei der Bewegung zeitweise zumindest einem Teil der Eintrittsöffnung 21 der Rinne 15 zugewandt gegenüber. Andererseits zeigen die Figuren 5a und 7a auch, dass sich das Entnahmeelement 13 in den beiden Randstellungen, in welchen die von dem Profillängsrichtungsverlauf 16 aufgespannte Betrachtungsebene 30 senkrecht zu der Strömungsrichtung 7 orientiert ist, vollständig aus einer Überlappung mit den Öffnungsquerschnitten 32 herausfahren lässt. Die Rinne 15 und insofern das gesamte Entnahmeelement 13 befinden sich dort außerhalb des von dem Punktmuster angedeuteten Strömungskernquerschnitts. Dazu ist vorgesehen, dass der Durchmesser d einer Kreislinie, entlang der sich die freien Ränder der Rinnenwände 18 erstrecken, in Bezug auf den Durchmesser D der Anschlussöffnungen 10 gleich groß oder größer ist. Der konkave Innenwandabschnitt 12 bildet insofern in der Bezugsebene 31 (diese fällt mit der Zeichenebene der Figuren 5a, 6a und 7a zusammen) zu beiden Seiten der Kernströmung einen Aufnahmebereich für das Entnahmeelement 13, der quasi im Strömungsschatten liegt. Da auch die Drehzapfen 22, 23 nicht nach innen ragen, wird in den Figuren 5a und 7a gezeigten Drehlagen die Kern- bzw. Hauptströmung nicht oder allenfalls unwesentlich gestört. Die in Figur 1 gestrichelt angedeuteten Leitungsabschnitte 5 besitzen jeweils den gleichen inneren und äußeren Durchmesser wie die Flanschstutzen 9, stoßen bündig an den jeweiligen Flanschstutzen 9 an und sind jeweils mit einem geeigneten Rohrverbinder 46 mit den betreffenden Flanschstutzen 9 dicht verbunden. In dem Beispiel handelt es sich bei dem Rohrverbinder 46 um ein kurzes Rohrstück, dessen Innendurchmesser dem Außendurchmesser des Flanschstutzens 9 und des Leitungsabschnittes 5 entspricht, das in Längsrichtung überlappend auf den Flanschstutzen 9 und den Leitungsabschnitt 5 aufgeschoben und daran jeweils umlaufend befestigt (bspw. verklebt, angeschweißt oder dergleichen) ist. Es versteht sich, dass auch alternative Möglichkeiten zur Befestigung von Leitungsabschnitten 5 bestehen.

In dem Ausführungsbeispiel wurde die erfindungsgemäße Vorrichtung in eine horizontal verlaufende Leitung eingebaut. Es versteht sich jedoch, dass diese Darstellung nur exemplarisch ist und die erfindungsgemäße Vorrichtung bei Bedarf auch in eine Leitung von beliebigem davon abweichendem Verlauf eingebaut werden könnte.

## Patentansprüche

1. Vorrichtung (1) zur Probennahme, insbesondere zur Entnahme von Proben aus rieselförmigem und/oder flüssigem und/oder gasförmigem Material,
umfassend ein Gehäuse (2), das eine Gehäusekammer (8) aufweist mit zwei voneinander beabstandeten Anschlussöffnungen (10) zum Anschluss von je einem von einem Materialstrom (11) durchströmbaren Leitungsabschnitt (5), wobei die beiden Anschlussöffnungen (10) insbesondere zueinander gleiche Öffnungsquerschnitte (32) besitzen, und
wobei die Vorrichtung (1) ein in der Gehäusekammer (8) bewegliches Entnahmeelement (13) umfasst,
wobei das Entnahmeelement (13) zumindest abschnittsweise profilartig ausgebildet ist,
wobei das Entnahmeelement (13) einen sich entlang eines Profillängsrichtungsverlaufes (16) erstreckenden hohlen Probeaufnahmebereich (19) an dessen Umfang unter Belassung einer sich entlang eines Öffnungslängsrichtungsverlaufs (20) erstreckenden, insbesondere schlitzartigen, Eintrittsöffnung (21) berandet,
wobei Führungsmittel vorgesehen sind, mittels denen eine definierte Bewegungsform des Entnahmeelements (13) in der Gehäusekammer (8) vorbestimmt ist, mittels der sich zumindest einer der beiden Öffnungsquerschnitte (32) in einer dazu senkrechten Projektionsbetrachtung mittels der Eintrittsöffnung (21) vollflächig überfahren lässt,
wobei zufolge der von den Führungsmitteln vorgegebenen Bewegungsform eine Orientierung des Entnahmeelements (13) in einer mit ihm bewegten Betrachtungsebene (30) relativ zu einer geometrischen Schnittlinie (33) der Betrachtungsebene (30) mit einer unbewegten geometrischen Bezugsebene (31), die zu der Betrachtungsebene (30) und zu zumindest einem Öffnungsquerschnitt (32) senkrecht verläuft, bei einer Bewegung des Entnahmeelements (13) gleichbleibend ist, **dadurch gekennzeichnet, dass** sich der Öffnungslängsrichtungsverlauf (20) des Entnahmeelements (13), insbesondere eben, entlang einer geometrischen Kugeloberfläche erstreckt und dass sich eine Bewegungsbahn bzw. Bewegungsform des Entnahmeelements (13) geometrisch in einer Kreisrichtung um eine Drehachse (14) erstreckt.

2. Vorrichtung (1) zur Probennahme, insbesondere zur Entnahme von Proben aus rieselförmigem und/oder flüssigem und/oder gasförmigem Material,
umfassend ein Gehäuse (2), das eine Gehäusekammer (8) aufweist mit zwei voneinander beabstandeten Anschlussöffnungen (10) zum Anschluss von je einem von einem Materialstrom (11) durchströmbaren Leitungsabschnitt (5), wobei die beiden Anschlussöffnungen (10) insbesondere zueinander gleiche Öffnungsquerschnitte (32) besitzen, und
wobei die Vorrichtung (1) ein in der Gehäusekammer (8) bewegliches Entnahmeelement (13) umfasst,
wobei das Entnahmeelement (13) zumindest abschnittsweise profilartig ausgebildet ist,
wobei das Entnahmeelement (13) einen sich entlang eines Profillängsrichtungsverlaufes (16) erstreckenden hohlen Probeaufnahmebereich (19) an dessen Umfang unter Belassung einer sich entlang eines Öffnungslängsrichtungsverlaufs (20) erstreckenden, insbesondere schlitzartigen, Eintrittsöffnung (21) berandet,
wobei Führungsmittel vorgesehen sind, mittels denen eine definierte Bewegungsform des Entnahmeelements (13) in der Gehäusekammer (8) vorbestimmt ist,
wobei an beide Anschlussöffnungen (10) je ein Leitungsabschnitt (5) angeschlossen ist, von denen ein Leitungsabschnitt (5) horizontal oder im Wesentlichen horizontal verläuft oder von denen beide Leitungsabschnitte (5) horizontal oder im Wesentlichen horizontal verlaufen, **dadurch gekennzeichnet, dass** sich der Öffnungslängsrichtungsverlauf (20) des Entnahmeelementes (13), insbesondere eben, entlang einer geometrischen Kugeloberfläche erstreckt und dass sich eine Bewegungsbahn bzw. Bewegungsform des Entnahmeelements (13) geometrisch in einer Kreisrichtung
um eine Drehachse (14) erstreckt.

3. Vorrichtung (1) nach einem oder mehreren der vorangehenden Ansprüche, **dadurch gekennzeichnet, dass** sich eine von der Eintrittsöffnung (21) abgewandte rückseitige Oberfläche (26) des Entnahmeelements (13) längs und quer zu dem Öffnungslängsrichtungsverlauf (20) entlang einer Kugeloberfläche erstreckt und dass die Gehäusekammer (8) zwischen den beiden Anschlussöffnungen (10) einen Innenwandabschnitt (12) aufweist, der sich entlang einer geometrischen Kugeloberfläche erstreckt und an den sich die Oberfläche (26) des Entnahmeelements (13) während eines Abschnitts seiner Bewegung spielfrei oder spielarm anschmiegt.

4. Vorrichtung (1) nach einem oder mehreren der vorangehenden Ansprüche, **dadurch gekennzeichnet, dass** sich das Entnahmeelement (13) in einer zu den Öffnungsquerschnitten (32) jeweils senkrechten Projektionsbetrachtung vollständig aus einer Überlappung mit einem Öffnungsquerschnitt (32) oder mit beiden Öffnungsquerschnitten (32) herausfahren lässt.

5. Vorrichtung (1) nach Anspruch 4, **dadurch gekennzeichnet, dass** sich das Entnahmeelement (13) an zwei möglichen zueinander entgegengesetzten Positionen innerhalb seiner Bewegungsbahn in einer zu den Öffnungsquerschnitten jeweils senkrechten Projektionsbetrachtung vollständig aus einer Überlappung mit einem Öffnungsquerschnitt oder mit beiden Öffnungsquerschnitten herausfahren lässt.

6. Vorrichtung (1) nach einem oder mehreren der vorangehenden Ansprüche, **dadurch gekennzeichnet, dass** das Entnahmeelement (13) zumindest abschnittsweise rinnenförmig oder als länglicher, entlang seines Öffnungslängsrichtungsverlaufs (20) geschlitzter Hohlkörper (39), insbesondere als geschlitzter rohrartiger Hohlkörper (39), ausgebildet ist, an dessen zumindest einem Längsende der hohle Probenaumahmebereich (19) in eine, insbesondere an deren ganzern Umfang umschlossene, Austrittsöffnung (27) übergeht.

7. Vorrichtung (1) nach einem oder mehreren der vorangehenden Ansprüche, **dadurch gekennzeichnet, dass** die Länge der Eintrittsöffnung (21) zumindest der maximalen Erstreckung von zumindest einem der Öffnungsquerschnitte in zumindest einer der Querschnittsrichtungen, insbesondere zumindest dem Durchmesser (D) des freien Öffnungsquerschnittes (32), entspricht.

8. Vorrichtung (1) nach einem oder mehreren der vorangehenden Ansprüche, **dadurch gekennzeichnet, dass** die Breite (b) der Eintrittsöffnung (21) quer zu dem Öffnungslängsrichtungsverlauf (20) und/oder die Breite des Querschnitts des hohlen Probeaufnahmebereichs (19) quer zum Profillängsrichtungsverlauf durchgehend oder zumindest abschnittsweise gleichbleibend ist und kleiner ist als die maximale Erstreckung, insbesondere als der Durchmesser (D), des freien Öffnungsquerschnittes (32).

9. Vorrichtung (1) nach einem oder mehreren der vorangehenden Ansprüche, **dadurch gekennzeichnet, dass** die Öffnungsquerschnitte (32) der beiden Anschlussöffnungen (10) zueinander parallel beabstandet und in einer zu ihren Querschnittsebenen senkrechten Projektionsrichtung konzentrisch angeordnet sind.

10. Vorrichtung (1) nach einem oder mehreren der vorangehenden Ansprüche, **dadurch gekennzeichnet, dass** die Bewegungsrichtung des Entnahmeelements (13) quer, insbesondere senkrecht, zu dem Öffnungslängsrichtungsverlauf (20) des Entnahmeelements (13) bzw. des hohlen Probeaufnahmebereichs (19) orientiert ist.

11. Vorrichtung (1) nach einem oder mehreren der vorangehenden Ansprüche, **dadurch gekennzeichnet, dass** eine Antriebseinrichtung, insbesondere ein elektrischer, pneumatischer oder hydraulischer Antrieb (25) oder dergleichen, zum Bewegungsantrieb des Entnahmeelements (13) vorgesehen ist, wobei die Antriebseinrichtung an eine Bewegung des Entnahmeelements (13) mit konstanter oder zeitlich veränderlicher Geschwindigkeit angepasst ist.

12. Vorrichtung (1) nach einem oder mehreren der vorangehenden Ansprüche, **dadurch gekennzeichnet, dass** kein Drehanschlag besteht, so dass sich das Entnahmeelement (13) um seine Drehachse (14) unbegrenzt drehen lässt.

13. Verfahren zur Probennahme, insbesondere zur Entnahme von Proben aus rieselförmigem und/oder flüssigem und/oder gasförmigem Material, umfassend die Verfahrensschritte:
Bereitstellen einer Vorrichtung (1) zur Probenentnahme, umfassend ein Gehäuse (2), das eine innere Gehäusekammer (8) aufweist mit zwei voneinander beabstandeten Anschlussöffnungen (10) zum Anschluss von je einem von einem Materialstrom (11) durchströmbaren Leitungsabschnitt (5), wobei die beiden Anschlussöffnungen (10) insbesondere zueinander gleiche Öffnungsquerschnitte (32) besitzen, und
wobei die Vorrichtung (1) ein in der Gehäusekammer (8) bewegliches Entnahmeelement (13) umfasst,
wobei das Entnahmeelement (13) zumindest abschnittsweise profilartig ausgebildet ist,
wobei das Entnahmeelement (13) einen sich entlang eines Profillängsrichtungsverlaufes (16) erstreckenden hohlen Probeaufnahmebereich (19) an dessen Umfang unter Belassung einer sich entlang eines Öffnungslängsrichtungsverlaufs (20) erstreckenden, insbesondere schlitzartigen, Eintrittsöffnung (21) berandet,
wobei Führungsmittel vorgesehen sind, mittels denen eine definierte Bewegungsform des Entnahmeelements (13) in der Gehäusekammer (8) vorbestimmt ist, entlang der sich zumindest einer der beiden Öffnungsquerschnitte (32) in einer dazu senkrechten Projektionsbetrachtung mittels der Eintrittsöffnung (21) vollflächig überfahren lässt,
wobei, während mittels der beiden Anschlussöffnungen (10) ein Materialstrom (12) durch die Gehäusekammer (8) geführt wird, das Entnahmeelement (13) durch die Gehäusekammer (8) bewegt wird, so dass dessen Orientierung in einer mit ihm bewegten Betrachtungsebene (30) relativ zu einer geometrischen Schnittlinie (33) der Betrachtungsebene (30) mit einer unbewegten, senkrecht zu zumindest einem Öffnungsquerschnitt verlaufenden geometrischen Bezugsebene (31) bei Bewegung des Entnahmeelements (13) gleichbleibend ist, **dadurch gekennzeichnet, dass** eine Vorrichtung verwendet wird, bei der sich der Öffnungslängsrichtungsverlauf (20) des Entnahmeelements (13), insbesondere eben, entlang einer geometrischen Kugeloberfläche erstreckt und bei der sich eine Bewegungsbahn bzw. Bewegungsform des Entnahmeelements (13) geometrisch in einer Kreisrichtung um eine Drehachse (14) erstreckt.

14. Verfahren nach dem vorangehenden Anspruch, **dadurch gekennzeichnet, dass** eine Vorrichtung (1) gemäß einem oder mehreren der Ansprüche 1 bis 12 verwendet wird.

15. Verfahren nach einem oder beiden der Ansprüche 13,14, **dadurch gekennzeichnet, dass** der Strömungsquerschnitt während eines Entnahmevorganges einmalig oder mehrmals ganzflächig mit der Eintrittsöffnung (21) des Entnahmeelements (13) in einer Projektionsbetrachtung überfahren wird oder dass ein kontinuierlicher Probenaustrag vorgesehen ist, wobei vielfache Querschnittsdurchquerungen mit dem Entnahmeelement (13) während beliebig langer Entnahmezeiträume erfolgen.

## Claims

1. Device (1) for sampling, in particular for withdrawing samples from free-flowing and/or liquid and/or gaseous material,
comprising a housing (2) having a housing chamber (8) which has two connection openings (10), spaced apart from one another, for connecting in each case a line portion (5) through which a material flow (11) may flow, the two connection openings (10) in particular having identical opening cross-sections (32), and
the device (1) including a withdrawal element (13) which is movable in the housing chamber (8),
the withdrawal element (13) being formed, at least in portions, in a profile-like manner,
the withdrawal element (13) bounding a hollow sampling region (19), extending along a profile longitudinal direction course (16), at the periphery of the sampling region, while leaving an entry opening (21) which in particular is slit-like and which extends along an opening longitudinal direction course (20),
guide means being provided by means of which a defined movement pattern of the withdrawal element (13) in the housing chamber (8) is predetermined, via which movement pattern at least one of the two opening cross-sections (32) in a projection view perpendicular thereto may be traversed over the entire area by means of the entry opening (21),
as a result of the movement pattern specified by the guide means, an orientation of the withdrawal element (13) in an observation plane which moves with the withdrawal element relative to a geometric intersection line (33) of the observation plane (30) with a nonmoving geometric reference plane (31) which extends perpendicular to the observation plane and to at least one opening cross-section (32), remaining the same when the withdrawal element (13) is moved, **characterized in that** the opening longitudinal direction course (20) of the withdrawal element (13) extends, in particular in an even manner, along a geometric spherical surface, and that a movement path or movement pattern of the withdrawal element (13) extends geometrically in a circular direction about a rotational axis (14).

2. Device (1) for sampling, in particular for withdrawing samples from free-flowing and/or liquid and/or gaseous material,
comprising a housing (2) having a housing chamber (8) which has two connection openings (10), spaced apart from one another, for connecting in each case a line portion (5) through which a material flow (11) may flow, the two connection openings (10) in particular having identical opening cross-sections (32), and
the device (1) including a withdrawal element (13) which is movable in the housing chamber (8),
the withdrawal element (13) being formed, at least in portions, in a profile-like manner,
the withdrawal element (13) bounding a hollow sampling region (19), extending along a profile longitudinal direction course (16), at the periphery of the sampling region, while leaving an entry opening (21) which in particular is slit-like and which extends along an opening longitudinal direction course (20),
guide means being provided by means of which a defined movement pattern of the withdrawal element (13) in the housing chamber (8) is predetermined,
a line portion (5) being connected to each of the two connection openings (10), from which one line portion (5) extends horizontally or substantially horizontally, or from which both line portions (5) extend horizontally or substantially horizontally **characterized in that** the opening longitudinal direction course (20) of the withdrawal element (13) extends, in particular in an even manner, along a geometric spherical surface, and that a movement path or movement pattern of the withdrawal element (13) extends geometrically in a circular direction about a rotational axis (14).

3. Device (1) according to one or more of the preceding claims, **characterized in that** a back surface (26) of the withdrawal element (13) facing away from the entry opening (21) extends longitudinally and transversely with respect to the opening longitudinal direction course (20) along a spherical surface, and that the housing chamber (8) has an inner wall portion (12) between the two connection openings (10) which extends along a geometric spherical surface and conforms without play or with little play to the surface (26) of the withdrawal element (13) during a portion of its movement.

4. Device (1) according to one or more of the preceding claims, **characterized in that** the withdrawal element (13) may be completely moved, in a projection view in each case perpendicular to the opening cross-sections (32), out of an overlap with one opening cross-section (32) or with both opening cross-sections (32).

5. Device (1) according to Claim 4, **characterized in that** the withdrawal element (13), at two possible positions within its movement path which are opposite one another, may be completely moved, in a projection view in each case perpendicular to the opening cross-sections (32), out of an overlap with one opening cross-section (32) or with both opening cross-sections5(32).

6. Device (1) according to one or more of the preceding claims, **characterized in that** the withdrawal element (13) has a grooved shape, at least in portions, or is formed as an elongated hollow body (39) that is slitted along its opening longitudinal direction course (20), in particular as a slitted tube-like hollow body (39), which at at least one lengthwise end of the hollow sampling region (19) merges into an exit opening (27) which in particular is enclosed along its entire periphery.

7. Device (1) according to one or more of the preceding claims, **characterized in that** the length of the entry opening (21) corresponds to at least the maximum extent of at least one of the opening cross-sections in at least one of the cross-sectional directions, and in particular corresponds at least to the diameter (D) of the free opening cross-section (32).

8. Device (1) according to one or more of the preceding claims, **characterized in that** the width (b) of the entry opening (21) transverse to the opening longitudinal direction course (20) and/or the width of the cross-section of the hollow sampling region (19) transverse to the profile longitudinal direction course is/are continuous, or constant at least in portions, and is/are smaller than the maximum extent, in particular smaller than the diameter (D), of the free opening cross-section of the connection openings (32).

9. Device (1) according to one or more of the preceding claims, **characterized in that** the opening cross-sections (32) of the two connection openings (10) are situated parallel to one another at a distance from one another, and situated concentrically with respect to one another in a projection direction perpendicular to their cross-sectional planes.

10. Device (1) according to one or more of the preceding claims, **characterized in that** the movement direction of the withdrawal element (13) is oriented transversely, in particular perpendicularly, with respect to the opening longitudinal direction course (20) of the withdrawal element (13) or of the hollow sampling region (19).

11. Device (1) according to one or more of the preceding claims, **characterized in that** a drive device, in particular an electric, pneumatic, or hydraulic drive (25) or the like, is provided for the movement drive of the withdrawal element (13), the drive device being adapted to a movement of the withdrawal element (13) at a constant speed or at a speed that varies with time.

12. Device (1) according to one or more of the preceding claims, **characterized in that** there is no rotational stop, so that the withdrawal element (13) may rotate about its rotational axis (14) without limitation.

13. Method for sampling, in particular for withdrawing samples from free-flowing and/or liquid and/or gaseous material, comprising the following method steps:
providing a device (1) for sampling, comprising a housing (2) having an inner housing chamber (8) which has two connection openings (10), spaced apart from one another, for connecting in each case a line portion (5) through which a material flow (11) may flow, the two connection openings (10) in particular having identical opening cross-sections (32), and
the device (1) including a withdrawal element (13) which is movable in the housing chamber (8),
the withdrawal element (13) being formed, at least in portions, in a profile-like manner,
the withdrawal element (13) bounding a hollow sampling region (19), extending along a profile longitudinal direction course (16), at the periphery of the sampling region, while leaving an entry opening (21) which in particular is slit-like and which extends along an opening longitudinal direction course (20),
guide means being provided by means of which a defined movement pattern or movement path of the withdrawal element (13) in the housing chamber (8) is predetermined, along which at least one of the two opening cross-sections (32) in a projection view perpendicular thereto may be traversed over the entire area by means of the entry opening (21),
while a material flow (12 [sic; 11]) is conducted through the housing chamber (8) by means of the two connection openings (10), the withdrawal element (13) being moved through the housing chamber (8), so that the orientation of the withdrawal element in an observation plane (30) which moves with the withdrawal element relative to a geometric intersection line (33) of the observation plane (30) with a nonmoving geometric reference plane (31) which extends perpendicular to at least one opening cross-section, remains the same when the withdrawal element (13) is moved,
**characterized in that** a device is used, for which the opening longitudinal direction course (20) of the withdrawal element (13) extends, in particular in an even manner, along a geometric spherical surface, and for which a movement path or movement pattern of the withdrawal element (13) extends geometrically in a circular direction about a rotational axis (14).

14. Method according to the preceding claim, **characterized in that** a device (1) according to one or more of Claims 1 to 12 is used.

15. Method according to one or both of Claims 13, 14, **characterized in that** during a collection operation, the flow cross-section is traversed by the entry opening (21) of the withdrawal element (13) in a projection view, one or more times over the entire area, or that a continuous sample discharge is provided, multiple cross-sectional traversals by the withdrawal element (13) taking place over a collection period of any desired length.

## Revendications

1. Dispositif (1) d'échantillonnage, en particulier pour le prélèvement d'échantillons de matériau ruisselant et/ou liquide et/ou gazeux,
comprenant un boîtier (2) qui présente une chambre (8) pourvue de deux ouvertures de raccordement (10) à raccorder chacune à une section de conduit (5) susceptible d'être traversée par un courant de matériau (11), les deux ouvertures de raccordement (10) ayant les mêmes sections transversales d'ouverture (32), et
le dispositif (1) comprenant dans la chambre (8) un élément de prélèvement mobile (13),
l'élément de prélèvement (13) est conçu au moins en partie comme un profilé,
l'élément de prélèvement (13) borde le pourtour d'une zone de réception d'échantillon (19) creuse s'étendant le long du tracé en direction longitudinale du profilé (16) en laissant une ouverture d'entrée (21) s'étendant, en particulier comme une fente, le long du tracé en direction longitudinale de l'ouverture (20),
des moyens de guidage étant prévus au moyen desquels une forme de mouvement défini de l'élément de prélèvement (13) dans la chambre (8) est déterminée et permettent de passer sur toute la surface d'au moins une des deux sections transversales d'ouverture (32), dans une visualisation en projection perpendiculaire à celle-ci, au moyen de l'ouverture d'entrée (21),
suivant la forme de mouvement donnée par les moyens de guidage une orientation de l'élément de prélèvement (13), dans un plan de visualisation (30) se déplaçant avec lui est, lors du mouvement de l'élément de prélèvement (13), constante par rapport à une ligne géométrique d'intersection (33) du plan de visualisation (30) avec un plan de référence géométrique immobile (31) qui s'étend perpendiculairement au plan de visualisation (30) et à au moins une section transversale d'ouverture (32), **caractérisé en ce que** le tracé en direction longitudinale de l'ouverture (20) de l'élément de prélèvement (13) s'étend, en particulier de manière plane, le long de la surface d'une sphère géométrique et **en ce que** un chemin de mouvement respectivement une forme de mouvement de l'élément de prélèvement (13) s'étend géométriquement en direction circulaire autour d'un axe de rotation (14).

2. Dispositif (1) d'échantillonnage, en particulier pour le prélèvement d'échantillons de matériau ruisselant et/ou liquide et/ou gazeux,
comprenant un boîtier (2) qui présente une chambre (8) pourvue de deux ouvertures de raccordement (10) à raccorder chacune à une section de conduit (5) susceptible d'être traversée par un courant de matériau (11), les deux ouvertures de raccordement (10) ayant les mêmes sections transversales d'ouverture (32), et
le dispositif (1) comprenant dans la chambre (8) un élément de prélèvement mobile (13),
l'élément de prélèvement (13) est conçu au moins en partie comme un profilé,
l'élément de prélèvement (13) borde le pourtour d'une zone de réception d'échantillon (19) creuse s'étendant le long du tracé en direction longitudinale du profilé (16) en laissant une ouverture d'entrée (21) s'étendant, en particulier comme une fente, le long du tracé en direction longitudinale de l'ouverture (20),
des moyens de guidage étant prévus au moyen desquels une forme de mouvement défini de l'élément de prélèvement (13) dans la chambre (8) est déterminée, une section de conduit (5) étant raccordée à chacune des deux ouvertures de raccordement (10), desquelles une section de conduit (5) part horizontalement ou essentiellement horizontalement ou desquelles les deux sections de conduit (5) partent horizontalement ou essentiellement horizontalement **caractérisé en ce que** le tracé en direction longitudinale de l'ouverture (20) de l'élément de prélèvement (13) s'étend, en particulier de manière plane, le long de la surface d'une sphère géométrique et **en ce que** un chemin de mouvement respectivement une forme de mouvement de l'élément de prélèvement (13) s'étend géométriquement en direction circulaire autour d'un axe de rotation (14).

3. Dispositif selon l'une ou plusieurs des revendications précédentes **caractérisé en ce que** l'une des ouvertures d'entrée (21) opposée à la surface de côté arrière (26) de l'élément de prélèvement (13) s'étend le long et transversalement au tracé en direction longitudinale d'ouverture (20) le long d'une surface sphérique, et que la chambre de boîtier (8) entre les deux ouvertures de raccordement (10) ayant une section de paroi intérieure (12) s'étendant le long de la surface d'une sphère géométrique et contre lequel la surface (26) de l'élément de prélèvement (13) se serre pendant une section de son mouvement sans jeu ou avec peu de jeu.

4. Dispositif selon l'une ou plusieurs des revendications précédentes **caractérisé en ce que** l'élément de prélèvement (13) peut sortir, dans une des sections transversales d'ouverture (32) respectivement dans une visualisation en projection perpendiculaire, complétement d'un chevauchement avec une section transversale d'ouverture (32) ou avec deux sections transversales d'ouverture (32).

5. Dispositif (1) selon la revendication 4 précédente **caractérisé en ce que** l'élément de prélèvement (13) peut sortir à deux positions possibles opposées l'une à l'autre au sein de son chemin de mouvement dans une des sections transversales d'ouverture respectivement dans une visualisation en projection perpendiculaire, complétement d'un chevauchement avec une section transversale d'ouverture ou avec deux sections transversales d'ouverture.

6. Dispositif (1) selon l'une ou plusieurs des revendications précédentes, **caractérisé en ce que** l'élément de prélèvement (13), au moins par sections ou sur toute la longueur, est formé le long le tracé en direction longitudinale de l'ouverture (20) à corps creux fendu (39), en particulier comme corps creux en forme de tube fendu (39), sur lequel au moins une extrémité longitudinale de la région de réception d'échantillon (19) creuse passe dans une ouverture de sortie (27), en particulier fermée sur tout son pourtour.

7. Dispositif (1) selon l'une ou plusieurs des revendications précédentes, **caractérisé en ce que** la longueur de l'ouverture d'entrée (21) correspond au moins à l'extension maximale d'au moins l'une des ouvertures des sections transversales dans au moins l'une des directions transversales, en particulier au moins le diamètre (D) de la section transversale d'ouverture (32).

8. Dispositif (1) selon l'une ou plusieurs des revendications précédentes, **caractérisé en ce que** la largeur (b) de l'ouverture d'entrée (21) transversalement au tracé en direction de l'ouverture longitudinale (20) et / ou la largeur de la section transversale de la région de réception d'échantillon (19) creuse est traversante transversalement au tracé en direction de l'ouverture longitudinale, ou au moins constante par section et est plus petite que l'extension maximale, en particulier que le diamètre (D), de la section transversale d'ouverture libre (32).

9. Dispositif (1) selon l'une ou plusieurs des revendications précédentes, **caractérisé en ce que** les sections transversales d'ouverture (32) des deux ouvertures de raccordement (10) sont espacées parallèlement l'une à l'autre et sont disposées concentriquement dans une direction de projection perpendiculaire à leurs plans de section transversale.

10. Dispositif (1) selon l'une ou plusieurs des revendications précédentes, **caractérisé en ce que** la direction de déplacement de l'élément de prélèvement (13) est orientée transversalement, en particulier perpendiculairement, au tracé en direction de l'ouverture longitudinale (20) de l'élément de prélèvement (13) respectivement de la région de réception d'échantillon (19) creuse.

11. Dispositif (1) selon l'une ou plusieurs des revendications précédentes, **caractérisé en ce qu'**un dispositif d'entraînement, en particulier un entraînement électrique, pneumatique ou hydraulique (25) ou analogue, est prévu pour un mouvement d'entraînement de l'élément de prélèvement (13), le moyen d'entraînement étant adapté à une vitesse constante ou variable dans le temps pour un mouvement de l'élément de prélèvement (13).

12. Dispositif (1) selon l'une ou plusieurs des revendications précédentes **caractérisé en ce qu'**il n'y aucune butée en rotation de sorte que l'élément de prélèvement (13) peut tourner autour de son axe de rotation (14) de façon illimitée.

13. Procédé d'échantillonnage, en particulier pour le prélèvement d'échantillons de matériau ruisselant et / ou liquide et / ou gazeux, comprenant les étapes consistant à:
fournir un dispositif (1) pour le prélèvement d'échantillons, comprenant un boîtier (2), comportant une chambre interne (8) pourvue de deux ouvertures de raccordement (10) à raccorder chacune à une section de conduit (5) susceptible d'être traversée par un courant de matériau (11), les deux ouvertures de raccordement (10) ayant les mêmes sections transversales d'ouverture (32),
le dispositif (1) comprenant dans la chambre (8) un élément de prélèvement mobile (13) qui est conçu au moins en partie comme un profilé,
l'élément de prélèvement (13) borde le pourtour d'une zone de réception d'échantillon (19) creuse s'étendant le long du tracé en direction longitudinale du profilé (16) en laissant une ouverture d'entrée (21) s'étendant, en particulier comme une fente, le long d'un tracé en direction de l'ouverture longitudinale (20),
des moyens de guidage étant prévus au moyen duquel une forme de mouvement défini de l'élément de prélèvement (13) dans la chambre (8) est déterminée, permettant de passer le long de toute la surface d'au moins une des deux sections transversales d'ouverture (32), dans une visualisation en projection perpendiculaire à celle-ci, au moyen de l'ouverture d'entrée (21),
tandis qu'au moyen des deux ouvertures de raccordement (10), un courant de matériau (12) est guidée à travers la chambre (8), l'élément de prélèvement (13) étant déplacé à travers la chambre (8) de sorte que l'orientation de l'élément de prélèvement (13), dans un plan de visualisation (30) se déplaçant avec lui est, lors du mouvement de l'élément de prélèvement (13), constante par rapport à une ligne géométrique d'intersection (33) du plan de visualisation (30) avec un plan de référence géométrique immobile (31) qui s'étend perpendiculairement au plan de visualisation (30) et à au moins une section transversale d'ouverture (32), **caractérisé en ce qu'**un dispositif est utilisé à l'occasion duquel le tracé en direction longitudinale de l'ouverture (20) de l'élément de prélèvement (13) s'étend, en particulier de manière plane, le long de la surface d'une sphère géométrique et **en ce que** un chemin de mouvement respectivement une forme de mouvement de l'élément de prélèvement (13) s'étend géométriquement en direction circulaire autour d'un axe de rotation (14).

14. Procédé selon la revendication précédente, **caractérisé en ce qu'**un dispositif (1) est utilisé selon une ou plusieurs des revendications 1 à 12.

15. Procédé selon l'une ou les deux revendications 13, 14, **caractérisé en ce que** la section de courant est traversée en totalité une fois ou plusieurs fois pendant le tracé de prélèvement (21) avec l'ouverture d'entrée (21) de l'élément de prélèvement (13) avec une visualisation en projection ou **en ce qu'**une évacuation continue d'échantillons est prévue, de multiples traversées de section transversale se produisant avec l'élément de prélèvement (13) pendant la durée du prélèvement de longueur quelconque.
